# EUROPÄISCHE PATENTSCHRIFT

(11) **EP 2 728 122 B1**
(45) Veröffentlichungstag und Bekanntmachung des Hinweises auf die Patenterteilung: **12.12.2018**
(21) Anmeldenummer: 12190529.3
(22) Anmeldetag: 30.10.2012
(51) Int. Cl.: F01D 11/12, F01D 9/04, F01D 25/24, F01D 11/08

(54) **Dichtungsträgerfixierung für eine Strömungsmaschine**
Blade Outer Air Seal fixing for a turbomachine
Fixation de support d'étanchéité pour turbomachine

(43) Veröffentlichungstag der Anmeldung: 07.05.2014
(73) Patentinhaber: MTU Aero Engines AG, 80995 München (DE)
(72) Erfinder: Feldmann, Manfred, 82223 Eichenau (DE); Sangl, Janine, Dachau 85221 (DE); Schinko, Norbert, 81373 München (DE)

(56) Entgegenhaltungen:
- EP-A2- 1 231 420
- DE-A1-102009 037 620
- DE-C1- 10 122 464
- GB-A- 2 239 678
- GB-A- 2 249 356
- US-A- 2 903 237

## Beschreibung

### HINTERGRUND DER ERFINDUNG

### GEBIET DER ERFINDUNG

Die vorliegende Erfindung betrifft eine Gehäusestruktur für eine Strömungsmaschine, insbesondere für eine Gasturbine oder ein Flugtriebwerk.

### STAND DER TECHNIK

Bei Strömungsmaschinen, wie stationären Gasturbinen oder Flugtriebwerken, wird Luft entlang eines Strömungskanals angesaugt, verdichtet und in einer Brennkammer zusammen mit Brennstoff verbrannt, wobei anschließend die Verbrennungsgase über den Strömungskanal ausgestoßen werden, um dabei in einer Turbine Rotoren anzutreiben.

Der Strömungskanal wird umlaufend von einer Gehäusestruktur umgeben, wobei zur Vermeidung von Strömungsverlusten die Rotoren bzw. an den Rotoren vorgesehene Laufschaufeln möglichst dicht an die Gehäusestruktur anliegen sollen. Um dies zu erreichen sind im Bereich der rotierenden Laufschaufeln an der Innenseite des Gehäuses sogenannte Anstreifbeläge oder Einlaufbeläge vorgesehen, die in schleifendem Kontakt mit Dichtspitzen sind, die an den radial äußeren Enden der Laufschaufeln angeordnet sind. Durch das Eingreifen der Dichtspitzen in die Einlaufbeläge bzw. Anstreifbeläge kann für viele unterschiedliche Betriebszustände der Gasturbine bzw. des Flugtriebwerks mit unterschiedlichen Längenausdehnungen eine radiale Abdichtung erzielt werden. Eine derartige Laufschaufel-Spitzenabdichtung wird auch als Outer-Air-Seal (OAS) bezeichnet.

Die Einlaufbeläge sind üblicherweise an einer Vielzahl in Umfangsrichtung angeordneten Dichtungsträgersegmenten ausgebildet, die zusammen einen Dichtungsträgerkranz bilden. Die Dichtungsträgersegmente, die auch als Outer-Air-Seal-Segmente bezeichnet werden, bzw. der Dichtungsträgerkranz müssen in radialer und axialer Richtung sowie in Umfangsrichtung fixiert werden, damit die Dichtwirkung zuverlässig bereitgestellt werden kann.

Nach dem Stand der Technik wird die axiale und radiale Fixierung des Dichtungsträgerkranzes bzw. der entsprechenden Segmente davon durch Einklemmen oder Einhaken an entsprechenden äußeren Gehäusebauteilen verwirklicht.

Allerdings besteht hierbei die Problematik, dass die Montage der Dichtungsträgersegmente bzw. des Dichtungsträgerkranzes dadurch aufwändig sein kann und zudem die Freiheiten in der Gestaltung der Gehäusestruktur oder der Ausführung der Leitschaufelaufhängung eingeschränkt sein können, mit der Folge, dass sich aerodynamisch ungünstige Verhältnisse einstellen können.

Beispiele für entsprechende Gehäusestrukturen oder die Anordnung von sogenannten Outer-Air-Seal-Segmenten sind in den Patentdokumenten US 6,129,513 A, EP 2 267 279 A1, DE 101 22 464 C1, US 8,011,879 B2 und EP 1 106 785 B1 gegeben.

Das Dokument US 2,903,237 offenbart eine Statorkonstruktion für eine Axialströmungsmaschine, wobei eine Verkleidung im Bereich der Laufschaufeln über einen T-förmigen Flanschbereich an einer Montageplattform einer Leitschaufel angeordnet ist und wobei ein Steg des T-förmigen Flansches in einen radial auswärts gerichteten Kanal der Montageplattform der Leitschaufel eingreift, wobei die Verkleidung radial bezogen auf die Montageplattform mit Hilfe von Zungen gehalten ist.

### OFFENBARUNG DER ERFINDUNG

### AUFGABE DER ERFINDUNG

Es ist somit Aufgabe der vorliegenden Erfindung eine Gehäusestruktur für eine Strömungsmaschine zu schaffen, bei der ein sogenannter Dichtungsträgerkranz bzw. Segmente davon in effizienter und einfacher Weise angeordnet werden können, wobei gleichzeitig für benachbarte Komponenten und Bauteile der Gehäusestruktur eine große Designfreiheit gewährleistet werden soll.

### TECHNISCHE LÖSUNG

Diese Aufgabe wird gelöst durch eine Gehäusestruktur mit den Merkmalen des Anspruchs 1. Weitere vorteilhafte Ausgestaltungen sind Gegenstand der abhängigen Ansprüche.

Die Erfindung schlägt vor eine Lagerung bzw. Verbindung des Dichtungsträgerkranzes bzw. von Segmenten davon an oder mit einem Leitschaufelkranz bzw. deren Segmenten insbesondere im Bereich der so genannten Vaneplattform in der Weise zu realisieren, dass am Dichtungsträgerkranz eine Aufnahme vorgesehen wird, die in radialer Richtung einseitig offen ist. Unter radialer Richtung wird hierbei die radiale Richtung bezogen auf die Strömungsrichtung im Strömungskanal verstanden. In diese einseitig offene Aufnahme greift ein radial hervorstehender Eingriffsbereich des korrespondierenden anderen Bauteils, also des Leitschaufelkranzes ein, sodass Dichtungsträgerkranz und Leitschaufelkranz bzw. deren Segmente in axialer Richtung und in radialer Richtung in Richtung der geschlossenen Seite der Aufnahme formschlüssig gehalten sind, aber die beiden Bauteile in einer radial entgegengesetzten Richtung in Richtung der Aufhahmeöffnung frei beweglich zueinander sind. Dadurch kann sowohl die Montage vereinfacht als auch die Gestaltung der umgebenen Komponenten variabler gestaltet werden. Die radiale Fixierung in Richtung von der Aufnahmeöffnung heraus wird dabei aus dem Verbindungsbereich zwischen Leitschaufelkranz und Dichtungsträgerkranz, der so genannten Linerfixierung, ausgelagert und beispielsweise dadurch bewirkt, dass der Dichtungsträgerkranz zwischen äußeren Gehäusebauteilen und dem Leitschaufelkranz gehalten wird.

Vorteilhaft ist vor allem auch die Anordnung des Verbindungsbereichs bzw. der Aufnahme und des Eingriffsbereichs im Bereich der so genannten Vaneplattform des Leitschaufelkranzes, welche zur Begrenzung des Strömungskanals in axialer Richtung bzw. mit wenigstens einer axialen Richtungskomponente von dem Leitschaufeln vergleichbar dem Deckband von Laufschaufeln hervorsteht.

Die einseitig offene Aufnahme kann im Wesentlichen U-förmig ausgebildet sein und entweder durch Materialaussparungen oder durch eine entsprechende Steganordnung, beispielsweise in Form von gebogenen Blechen oder dergleichen, gebildet sein.

Der zur Aufnahme komplementäre, radial vorstehende Eingriffsbereich kann durch einen radial verlaufenden Steg oder entsprechende Komponenten gebildet sein.

Durch radial sich überdeckende Wandbereiche des radial hervorstehenden Eingriffsbereichs und der einseitig offenen Aufnahme kann zusätzlich eine Dichtwirkung erzielt werden, die insbesondere eine um den Strömungskanal zumindest segmentweise umlaufende Dichtfläche, die sich in radialer Richtung erstreckt, ausbildet.

Die erfindungsgemäße Verbindung zwischen Leitschaufelkranz und Dichtungsträgerkranz kann insbesondere auch bei der Verbindung des Dichtungsträgerkranzes mit einem stromaufwärts gelegenen Leitschaufelkranz vorgesehen werden, was aufgrund von Wärmeausdehnungserscheinungen vorteilhaft sein kann.

### KURZBESCHREIBUNG DER FIGUREN

Die beigefügten Zeichnungen zeigen in rein schematischer Weise in
Fig. 1 einen teilweisen Querschnitt und eine erste erfindungsgemäße Gehäusestruktur eines Flugtriebwerks; und in
Fig. 2 eine teilweise Schnittansicht einer Ausführungsform, welche nicht Teil der Erfindung ist, einer Gehäusestruktur eines Flugtriebwerks.

### AUSFÜHRUNGSBEISPIELE

Weitere Vorteile, Kennzeichen und Merkmale der vorliegenden Erfindung werden bei der nachfolgenden detaillierten Beschreibung der Ausführungsbeispiele deutlich. Allerdings ist die Erfindung nicht auf diese Ausführungsbeispiele beschränkt.

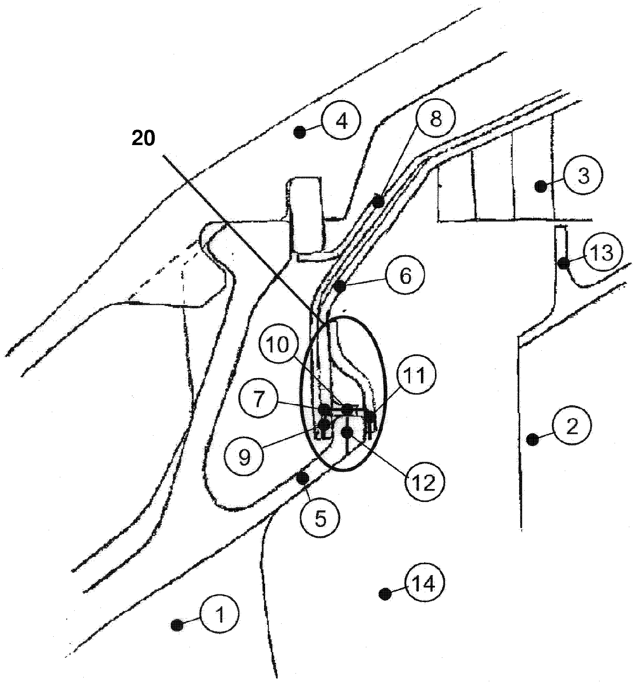

Die Fig. 1 zeigt einen teilweisen Querschnitt durch einen Gehäusebereich eines Flugtriebwerks, wobei das Gehäuse einen Strömungskanal 14 ringförmig umgibt. In dem Strömungskanal 14 sind Leitschaufeln 1 und Laufschaufeln 2 angeordnet, die das Strömungsfluid leiten bzw. von diesem angetrieben werden. Die Laufschaufeln 2 weisen an den radial äußeren Enden sogenannte Dichtspitzen 13 auf, die in einen Einlaufbelag 3 eingreifen können, um ein sogenanntes Outer-Air-Seal (OAS) zu bilden. Durch das Einschleifen der Dichtspitzen 13 in den Einlaufbelag 3 kann eine radiale Abdichtung zwischen den Laufschaufeln 2 und dem Gehäuse erzielt werden, sodass kein Strömungsfluid an den Laufschaufeln 2 vorbeiströmen kann, ohne diese anzutreiben, sodass insgesamt Strömungsverluste vermieden werden. Der Einlaufbelag 3 ist an einem sogenannten Dichtungsträgerkranz 6 angeordnet, wobei der Dichtungsträgerkranz 6 in Umfangsrichtung in eine Vielzahl von Segmenten unterteilt ist.

Ähnlich dem Dichtungsträgerkranz 6 bilden die Leitschaufeln 1 mit in axialer Richtung hervorstehenden Plattformen 5 (so genannten Vaneplattformen) einen umgebenden Leitschaufelkranz aus, der mit dem Dichtungsträgerkranz 6 verbunden ist, um eine innere Gehäusewand gegenüber dem Strömungskanal 14 zu bilden. Zwischen der äußeren Gehäusewand 4 und dem Leitschaufelkranz 5 bzw. dem Dichtungsträgerkranz 6 sind weitere Dichtungs- und Isolierelemente sowie Hitzeschilde 8 und dergleichen vorgesehen, auf die hier nicht näher eingegangen wird.

Bei dem gezeigten Ausführungsbeispiel der Fig. 1 weist der Leitschaufelkranz 5 in Umfangsrichtung umlaufend einen radial hervorstehenden Steg 12 auf, der rein schematisch mit einer Strichdarstellung zusätzlich verdeutlicht ist.

Der radial hervorstehende Steg 12 greift in eine Aufnahme 7 ein, die im Querschnitt U-förmig ausgebildet ist und radial nach innen offen ist. Die Aufnahme 7 wird im gezeigten Ausführungsbeispiel durch Stegbereiche bzw. Abschnitte 9, 10 und 11 des Dichtungsträgers 6 gebildet. Die U - Form ist durch ein zusätzlich eingezeichnetes U noch einmal verstärkt dargestellt. Sofern der radial hervorstehende Steg 12 in der Aufnahme 7 angeordnet ist, ist der Dichtungsträgerkranz 6 bzw. deren einzelne Segmente in der radialen Richtung nach innen und in axialer Richtung formschlüssig gehalten. In radialer Richtung nach außen kann der Dichtungsträgerkranz 6 bzw. die einzelnen Elemente von dem Leitschaufelkranz 5 ohne Weiteres abgehoben werden, da keine formschlüssige Halterung in dieser Richtung vorgesehen ist. In der Richtung radial nach außen wird der Dichtungsträgerkranz 6 im zusammengebauten Zustand durch äußere Gehäusebauteile gehalten. Entsprechend kann auf eine Fixierung des Leitschaufelkranzes 5 bzw. des Dichtungsträgerkranzes 6 oder einzelner Segmente davon in radialer Richtung nach außen im Verbindungsbereich 20 des radial hervorstehenden Stegs und der Aufnahme 7 verzichtet werden. Dies führt zu einer einfachen Möglichkeit des Zusammenbaus, wobei gleichzeitig eine effektive Fixierung möglich ist, die darüber hinaus eine Dichtwirkung bereitstellen kann. Durch die am Steg 12 anliegenden Abschnitte 9, 10 und 11 der Aufnahme kann eine Abdichtung erzielt werden. Dabei ist es für die Erzielung der Dichtwirkung ausreichend, wenn der Steg 12 und einer der Abschnitte 9, 10, 11 der Aufnahme 7 umlaufend aneinander anliegen.

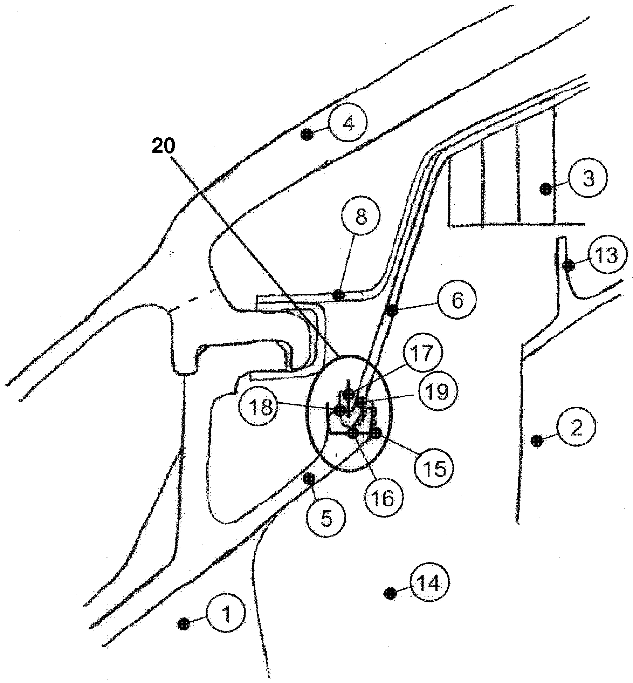

In der Fig. 1 ist die einseitig offene Aufnahme 7 so ausgebildet, dass die Aufnahmeöffnung in radialer Richtung nach innen angeordnet ist, während der radial hervorstehende Steg 12 nach außen weist. Im Ausführungsbeispiel der Fig. 2 sind die Verhältnisse genau umgekehrt, wobei die übrigen Bauteile, wie Leitschaufeln 1, Laufschaufeln 2, äußeres Gehäuseteil 4, Leitschaufelkranz 5 und Dichtungsträgerkranz 6 identisch mit der Ausführungsform der Fig. 1 sind und deshalb mit gleichen Bezugszeichen versehen sind.

Bei der Ausführungsform der Fig. 2 ist nunmehr die Aufnahme 15 als Materialaussparung in der Plattform 5 des Leitschaufelkranzes ausgebildet, wobei das überlagert eingezeichnete U die Querschnittsform der Aufnahme 15 verdeutlicht.

Der radial hervorspringende Steg 17, der wiederum durch eine überlagerte Schemadarstellung mit einem entsprechenden Strich verdeutlicht ist, ist bei dem Dichtungsträgerkranz 6 der Ausführungsform der Fig. 2 durch einen umgebördelten Rand mit entsprechenden Stegbereichen 18, 19 gebildet, wobei der umgebördelte Rand so ausgebildet ist, dass er genau in die Aufnahme 15 passt.

Auch hier ist in radialer Richtung nach innen sowie in axialer Richtung ein Formschluss gegeben, während der Dichtungsträgerkranz 6 bzw. einzelne Segmente davon ungehindert in radialer Richtung nach außen von der Aufnahme entfernt werden können, wenn die äußeren Gehäusebauteile eine radial nach außen gerichtete Bewegung des Dichtungsträgerkranzes 6 nicht verhindern würden. Gleichwohl wird durch eine derartige Ausbildung eine einfachere Montage bei gleichzeitig stabilen und exakten Fixierung erreicht, da u.a. im Verbindungsbereich 20 der Aufnahme 15 und des radial hervorspringenden Stegs 17 die Funktion einer radialen Fixierung in einer Richtung weggelassen worden ist und diese Funktion den äußeren Gehäusebauteilen zugeordnet worden ist. Durch die entsprechende Anordnung, wie sie in den Fig. 1 und 2 beschrieben ist, lässt sich auch ein Hohlraum oberhalb der Plattform 5 des Schaufelkranzsegments minimieren, was aerodynamische Vorteile mit sich bringt, da nachteilige Verwirbelung vermieden werden.

Obwohl die vorliegende Erfindung anhand der Ausführungsbeispiele detailliert beschrieben worden ist, ist die Erfindung nicht auf diese Ausführungsbeispiele beschränkt sondern vielmehr sind Abwandlungen in der Weise möglich, dass einzelne Merkmale weggelassen oder andersartige Kombinationen der Merkmale verwirklicht werden, solange der Schutzbereich der beigefügten Ansprüche nicht verlassen wird.

## Patentansprüche

1. Gehäusestruktur für eine Strömungsmaschine mit einem Leitschaufelkranz und einem Dichtungsträgerkranz (6), der einen Strömungskanal (14) der Strömungsmaschine ringförmig umgibt, wobei Leitschaufelkranz und Dichtungsträgerkranz miteinander verbunden sind,
**dadurch gekennzeichnet, dass**
der Dichtungsträgerkranz eine bezogen auf den Strömungskanal in radialer Richtung einseitig offene und durch eine Steganordnung gebildete Aufnahme (7) und entsprechend der verbundene Leitschaufelkranz einen radial vorstehenden Eingriffsbereich (12) aufweisen, der so in der Aufnahme aufgenommen werden kann, dass er in axialer Richtung und in radialer Richtung in Richtung der geschlossenen Seite der Aufnahme formschlüssig gehalten ist, aber radial entgegengesetzt in Richtung der Aufnahmeöffnung gegenüber der verbundenen Aufnahme und den diese Aufnahme aufweisenden Dichtungsträgerkranz frei beweglich ist.

2. Gehäusestruktur nach Anspruch 1,
**dadurch gekennzeichnet, dass**
der Leitschaufelkranz eine axial vorstehende Plattform (5) aufweist, die den Strömungskanal ringförmig umgibt, wobei der Verbindungsbereich (20) zwischen Leitschaufelkranz und Dichtungsträgerkranz an der Plattform angeordnet ist.

3. Gehäusestruktur nach Anspruch 1,
**dadurch gekennzeichnet, dass**
die Aufnahme (7) im wesentlichen U - förmig ausgebildet ist.

4. Gehäusestruktur nach einem der vorhergehenden Ansprüche,
**dadurch gekennzeichnet, dass**
der radial vorstehende Eingriffsbereich (12) durch einen radial verlaufenden Steg gebildet ist.

5. Gehäusestruktur nach einem der vorhergehenden Ansprüche,
**dadurch gekennzeichnet, dass**
der Dichtungsträgerkranz (6) in radialer Richtung zwischen Leitschaufelkranz (5) und äußeren Gehäusebauteilen (4) gehalten ist.

6. Gehäusestruktur nach einem der vorhergehenden Ansprüche,
**dadurch gekennzeichnet, dass**
der radial vorstehende Eingriffsbereich (12) und die Aufnahme (7) durch radial überdeckende Wandbereiche eine Dichtung ausbilden, die insbesondere eine umlaufende, in radialer Richtung sich erstreckende Dichtfläche bereitstellt.

7. Gehäusestruktur nach einem der vorhergehenden Ansprüche,
**dadurch gekennzeichnet, dass**
die Aufnahme mehrere Abschnitte (9,10,11) aufweist, die im Querschnitt die U-förmige Gestalt der Aufnahme definieren, wobei mindestens ein einziger Abschnitt umlaufend an dem radial vorstehenden Eingriffsbereich anliegt.

8. Gehäusestruktur nach einem der vorhergehenden Ansprüche,
**dadurch gekennzeichnet, dass**
der mit dem Dichtungsträgerkranz (6) über die radial einseitig offene Aufnahme und den radial vorstehenden Eingriffsbereich verbundene Leitschaufelkranz (5) stromaufwärts angeordnet ist.

9. Gehäusestruktur nach einem der vorhergehenden Ansprüche,
**dadurch gekennzeichnet, dass**
der Dichtungsträgerkranz (6) und/oder der Leitschaufelkranz (5) in Umfangsrichtung mehrere Segmente aufweist.

10. Gehäusestruktur nach einem der vorhergehenden Ansprüche,
**dadurch gekennzeichnet, dass**
der Dichtungsträgerkranz einen Einlaufbelag (3) aufweist, gegenüber dem die Laufschaufelspitzen (13) anschleifen.

## Claims

1. Casing structure for a turbomachine comprising a vane ring and a seal carrier ring (6), which annularly surrounds a flow duct (14) of the turbomachine, the vane ring and seal carrier ring being interconnected, **characterized in that** the seal carrier ring comprises a seat (7) which is formed by a rib arrangement and is open on one side in the radial direction with respect to the flow duct and the connected vane ring correspondingly comprises a radially protruding engagement portion (12), which can be accommodated in the seat in such a way that it is interlockingly held towards the closed end of the seat in the axial direction and in the radial direction, but is freely movable, with respect to the connected seat and the seal carrier ring comprising said seat, towards the seat opening in a radially opposed manner.

2. Casing structure according to claim 1, **characterized in that** the vane ring comprises an axially protruding platform (5) which annularly surrounds the flow duct, the connection region (20) being arranged on the platform between the vane ring and the seal carrier ring.

3. Casing structure according to claim 1, **characterized in that** the seat (7) is substantially U-shaped.

4. Casing structure according to any of the preceding claims, **characterized in that** the radially protruding engagement region (12) is formed by a radially extending rib.

5. Casing structure according to any of the preceding claims, **characterized in that** the seal carrier ring (6) is held between the vane ring (5) and outer casing components (4) in the radial direction.

6. Casing structure according to any of the preceding claims, **characterized in that** the radially protruding engagement region (12) and the seat (7) form a seal by means of radially overlapping wall regions, which seal in particular provides a circumferential sealing surface which extends in the radial direction.

7. Casing structure according to any of the preceding claims, **characterized in that** the seat comprises a plurality of portions (9, 10, 11) which define the U-shape of the seat in cross section, at least one single portion circumferentially resting on the radially protruding engagement region.

8. Casing structure according to any of the preceding claims, **characterized in that** the vane ring (5) connected to the seal carrier ring (6) by means of the seat which is radially open on one side and the radially protruding engagement region is arranged upstream.

9. Casing structure according to any of the preceding claims, **characterized in that** the seal carrier ring (6) and/or the vane ring (5) comprises a plurality of segments in the circumferential direction.

10. Casing structure according to any of the preceding claims, **characterized in that** the seal carrier ring comprises an abradable coating (3), against which the guide vane tips (13) grind.

## Revendications

1. Structure de carter, destinée à une turbomachine, comprenant une couronne d'aubes directrices et une couronne de support et d'étanchéité (6) qui entoure annulairement un conduit d'écoulement (14) de la turbomachine, la couronne d'aubes directrices et la couronne de support et d'étanchéité étant raccordées l'une à l'autre,
**caractérisée en ce que**
la couronne de support et d'étanchéité comporte un logement (7) ouvert d'un côté dans la direction radiale par rapport au conduit d'écoulement et formé par un agencement de nervures et, de manière correspondante, la couronne d'aubes directrices comporte une zone d'engagement (12), faisant saillie radialement, qui peut être reçue dans le logement de de manière à être maintenue par complémentarité de formes en direction du côté fermé du logement dans la direction axiale et dans la direction radiale, mais de manière à être librement mobile de façon radialement opposée en direction de l'ouverture de logement par rapport au logement raccordé et à la couronne de support et d'étanchéité comportant ce logement.

2. Structure de carter selon la revendication 1,
**caractérisée en ce que**
la couronne d'aubes directrices comporte une plateforme (5), faisant saillie axialement, qui entoure annulairement le conduit d'écoulement, la zone de raccordement (20) étant disposée au niveau de la plateforme entre la couronne d'aubes directrices et la couronne de support et d'étanchéité.

3. Structure de carter selon la revendication 1,
**caractérisée en ce que**
le logement (7) a sensiblement la forme d'un U.

4. Structure de carter selon l'une des revendications précédentes,
**caractérisée en ce que**
la zone d'engagement (12), faisant saillie radialement, est formée par une nervure s'étendant radialement.

5. Structure de carter selon l'une des revendications précédentes,
**caractérisée en ce que**
la couronne de support et d'étanchéité (6) est retenue dans la direction radiale entre la couronne d'aubes directrices (5) et des composants de carter extérieurs (4).

6. Structure de carter selon l'une des revendications précédentes,
**caractérisée en ce que**
la zone d'engagement (12), faisant saillie radialement, et le logement (7) forment, par le biais de zones de paroi à recouvrement radial, une étanchéité qui présente en particulier une surface d'étanchéité périphérique s'étendant dans la direction radiale.

7. Structure de carter selon l'une des revendications précédentes,
**caractérisée en ce que**
le logement comporte plusieurs portions (9, 10, 11) qui définissent en coupe transversale la forme en U du logement, au moins une portion unique venant périphériquement en appui sur la zone d'engagement faisant saillie radialement.

8. Structure de carter selon l'une des revendications précédentes,
**caractérisée en ce que**
la couronne d'aubes directrices (5) raccordée à la couronne de support de garniture d'étanchéité (6) par le biais du logement ouvert radialement d'un côté et de la zone d'engagement faisant saillie radialement est disposée en amont.

9. Structure de carter selon l'une des revendications précédentes,
**caractérisée en ce que**
la couronne de support et d'étanchéité (6) et/ou la couronne d'aubes directrices (5) comporte plusieurs segments dans la direction circonférentielle.

10. Structure de carter selon l'une des revendications précédentes,
**caractérisée en ce que**
la couronne de support et d'étanchéité comporte une garniture de rodage (3) contre laquelle les pointes d'aubes directrices (13) viennent frotter.
